(19) **Europäisches Patentamt European Patent Office Office européen des brevets**

(11) **EP 3 728 994 B1**

(12) **FASCICULE DE BREVET EUROPEEN**

(45) Date de publication et mention de la délivrance du brevet:
**29.10.2025 Bulletin 2025/44**

(21) Numéro de dépôt: **18822097.4**

(22) Date de dépôt: **20.12.2018**

(51) Classification Internationale des Brevets (IPC):
**G01C 11/00** *(2006.01)*   **G01C 21/16** *(2006.01)*
**G06T 7/73** *(2017.01)*

(52) Classification Coopérative des Brevets (CPC):
**G01C 11/00; G06T 7/73**

(86) Numéro de dépôt international:
**PCT/EP2018/086346**

(87) Numéro de publication internationale:
**WO 2019/122216 (27.06.2019 Gazette 2019/26)**

(54) **PROCÉDÉ DE REPÉRAGE D'UN PLAN DE POSE FAISANT PARTIE D'UN VÉHICULE, DISPOSITIFS ET PROCÉDÉS ASSOCIÉS**

VERFAHREN ZUR LOKALISIERUNG EINER MONTAGEEBENE, DIE EINEN TEIL EINES FAHRZEUGS BILDET, UND ZUGEHÖRIGE VORRICHTUNGEN UND VERFAHREN

METHOD FOR LOCATING A MOUNTING PLANE FORMING PART OF A VEHICLE, AND ASSOCIATED DEVICES AND METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2017 FR 1701334**

(43) Date de publication de la demande:
**28.10.2020 Bulletin 2020/44**

(73) Titulaire: **THALES**
**92400 Courbevoie (FR)**

(72) Inventeurs:
• **THIBOUT, Paul**
  **78995 Elancourt Cedex (FR)**
• **SIMON, Alain**
  **78995 Elancourt Cedex (FR)**
• **LE GUSQUET, Frédéric**
  **78995 Elancourt Cedex (FR)**

(74) Mandataire: **Lavoix**
**2, place d'Estienne d'Orves**
**75441 Paris Cedex 09 (FR)**

(56) Documents cités:
EP-A2- 1 120 746    DE-A1- 102015 209 764
FR-A1- 2 870 592    US-A1- 2009 257 620

**Description**

DOMAINE TECHNIQUE DE L'INVENTION

La présente invention concerne un procédé de repérage dans l'espace d'un « plan de pose » fixe ou mobile dans les six degrés de liberté via l'utilisation d'une caméra qui observe à distance des repères fixes. La présente invention se rapporte aussi à un procédé d'obtention de l'orientation angulaire d'une ligne de visée d'une charge utile installée sur le dit « plan de pose » par rapport au nord géographique et à un procédé d'obtention angulaire de l'orientation d'un corps, installé en haut d'un mat flexible, par rapport au nord géographique. La présente invention concerne également un dispositif de repérage et un véhicule associés.

ARRIERE-PLAN TECHNOLOGIQUE DE L'INVENTION

Dans le domaine de repérage d'un objet par un senseur d'observation, il est souhaitable de pouvoir localiser la position de l'objet dans un repère géographique. Pour cela, il convient d'être capable de repérer la position absolue d'un point d'observation (en général, ses coordonnées dans un repère géographique), l'orientation absolue (c'est-à-dire l'angle par rapport au nord géographique) de la ligne de visée du senseur situé au point d'observation et pointé vers l'objet à repérer, ainsi que la distance de l'objet au senseur.

La distance de l'objet au senseur est usuellement aisément obtenue par un télémètre mais il est délicat de repérer la position absolue du point d'observation et plus particulièrement l'orientation absolue de la ligne de visée du senseur.

Pour cela, de multiples techniques sont connues. Par exemple, il est possible d'utiliser un certain nombre d'amers, c'est-à-dire un certain nombre de point de coordonnées connues et visibles depuis le point d'observation, pourvu qu'ils existent. Il est également connu d'utiliser : un chercheur de nord magnétique qui est très sensible à la présence de champ électromagnétique et de masse métallique ; un système de géolocalisation différentiel très volumineux et pas fonctionnel sous des zones couvertes comme les forêts ; des corps célestes comme des étoiles et un catalogue astrométrique de type Hipparcos ou des éphémérides de satellites qui impliqueraient de réaliser continuellement la mesure avec un volume de baffle important pour limiter les éclairements ainsi qu'une densité d'information assez pauvre pour le traitement des images en opération diurne avec un fonctionnement au sol très difficile en présence d'une couverture nuageuse.

Aucune des techniques précédentes ne permet de garantir une bonne précision dans la détermination de l'orientation d'un plan de pose, en intégrant l'ensemble des contraintes listées ci-dessus.

Pour remédier à un tel problème, il est généralement utilisé une centrale de navigation. Une centrale de navigation est également appelée une centrale à inertie ou une centrale inertielle. Une centrale à inertie est un instrument utilisé en navigation, capable d'intégrer les mouvements d'un mobile (accélération et vitesse angulaire) pour estimer son orientation (angles de roulis, de tangage et de cap), sa vitesse linéaire et sa position. L'estimation de position est relative au point de départ ou au dernier point de recalage. Une centrale à inertie est un équipement de navigation comportant usuellement trois gyromètres ou gyroscopes mesurant les trois composantes du vecteur vitesse angulaire (vitesses de variation des angles de roulis, de tangage et de lacet) et trois accéléromètres. La centrale à inertie comporte en outre un calculateur propre à déterminer à partir des mesures des gyromètres et accéléromètre les angles d'attitude (roulis, tangage et cap), le vecteur vitesse et la position. L'emploi d'une centrale de navigation sur un système permet de repérer la position absolue du point d'observation et son attitude avec une bonne précision, et ce dans tout type de milieu. En effet, une centrale de navigation présente, en outre, l'avantage d'être insensible à l'environnement, pour une large gamme de latitudes pas trop proches des pôles géographiques de la terre, notamment aux perturbations magnétiques et aux couvertures nuageuses.

Cependant, la précision d'orientation du point d'observation au niveau de la charge utile n'est obtenue qu'à la condition que la centrale de navigation soit solidaire du point d'observation. Ce n'est notamment pas le cas pour un senseur déporté sur un mât de véhicule alors que la centrale reste au niveau du châssis dudit véhicule dans le cadre de l'architecture la plus classique rencontrée sur les systèmes de ce type.

Pour cela, il peut être utilisé un système AHRS (sigle de 'Attitude and Heading Reference System') déterminant uniquement l'attitude au niveau de la charge utile.

Mais, un tel système présente encore un coût conséquent, des problèmes d'encombrement pour placer le système AHRS au voisinage des axes de référence de la charge utile et implique un traitement d'hybridation des mesures du système AHRS à celle de la centrale de navigation pour en restituer la performance.

Le document US 2009/257620 A1 décrit un procédé de repérage de la tête d'un mât d'un véhicule, le mât étant destiné à supporter une charge utile. L'orientation angulaire ou l'attitude de la tête du mât dans un repère absolu (géographique) est déterminée à partir d'une boussole numérique et d'encodeurs placés dans le mât.

Des exemples de systèmes sont également connus des documents FR 2 840 592 A1, DE 10 2015 209764 A1 et EP 1 120 746 A2.

## RESUME DE L'INVENTION

Il existe un besoin pour un procédé de repérage d'un plan de pose fixe ou mobile, le plan de pose étant destiné à supporter une ou plusieurs charges utiles, qui soit précis et de mise en œuvre aisée.

Il est à noter que le repérage du plan de pose consiste à estimer sa 'pose', c'est-à-dire la position et l'attitude du plan de pose dans un repère connu.

Pour cela, la description propose un procédé de repérage d'une face supérieure de la tête d'un mât, selon la revendication 1.

Suivant des modes de réalisation particuliers, le procédé de repérage comprend une ou plusieurs des caractéristiques des revendications 2 à 7 prise(s) isolément ou suivant toutes les combinaisons techniquement possibles.

La présente description a également pour objet un procédé d'obtention de l'orientation angulaire d'une ligne de visée, selon la revendication 8.

La présente description concerne également un procédé d'obtention de l'orientation angulaire d'un corps, selon la revendication 9.

Selon un mode de réalisation particulier d'un procédé d'obtention précédent, le véhicule est pourvu d'une centrale de navigation, l'étape de mesure de l'orientation angulaire étant mise en œuvre à partir de données issues de la centrale de navigation.

La présente description concerne également un dispositif de repérage selon la revendication 11.

La présente description concerne également un véhicule selon la revendication 12

## BREVE DESCRIPTION DES FIGURES

D'autres caractéristiques et avantages de l'invention apparaîtront à la lecture de la description qui suit de modes de réalisation de l'invention, donnée à titre d'exemple uniquement et en référence aux dessins qui sont :

- figure 1, un schéma-bloc d'un véhicule comportant un corps et un mât,
- figure 2, une vue de haut d'un exemple de configuration d'éléments référencés,
- figure 3, une vue de haut d'un autre exemple de configuration d'éléments référencés,
- figure 4, une vue de haut d'encore un autre exemple de configuration d'éléments référencés,
- figure 5, une représentation schématique d'un véhicule, et
- figure 6, un ordinogramme d'un exemple de mise en œuvre du procédé de d'obtention de l'orientation d'une ligne de visée d'une charge utile par rapport au nord géographique.

## DESCRIPTION DE MODES DE REALISATION PARTICULIERS

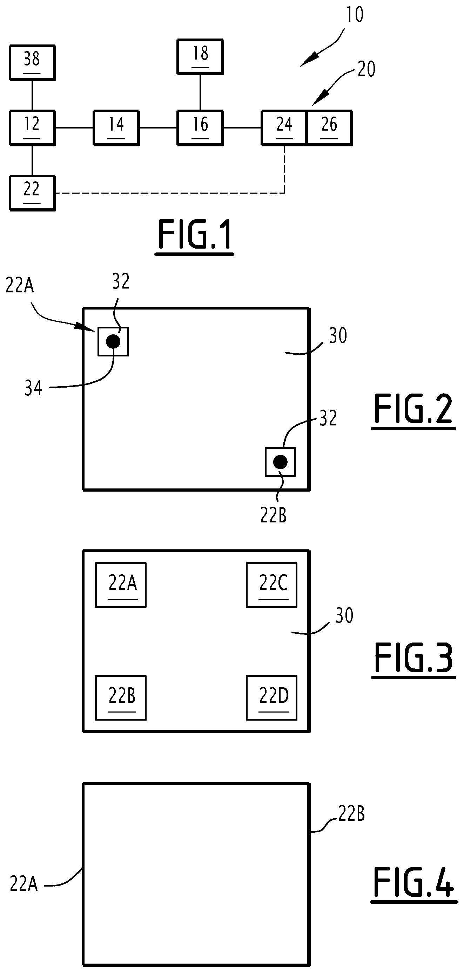

Un véhicule 10 est représenté schématiquement sur la figure 1.

Le véhicule 10 est, par exemple, un véhicule terrestre. En variante, le véhicule 10 est un sous-marin, un avion, un hélicoptère ou un véhicule spatial.

Le véhicule 10 comporte un corps 12, un mât 14 comprenant un plan de pose 16, une charge utile 18 et un dispositif de repérage 20.

Au moins un élément référencé 22 est défini pour le corps 12.

Chaque élément référencé 22 comporte une pluralité de points référencés.

Le mât 14 est, par exemple, un mât télescopique.

Le plan de pose 16 est la face supérieure de la tête du mât 14.

Le plan de pose 16 est destiné à supporter au moins une charge utile 18.

La charge utile 18 disposée sur le plan de pose 16 est, par exemple, un senseur.

Par exemple, le senseur est un senseur optronique. A titre d'illustration, le senseur optronique est un système comportant une tête optronique, un ensemble mécanique permettant de positionner et d'orienter la tête.

Selon un autre exemple, le senseur est un radar, un télémètre ou un sonar.

Alternativement ou en complément, la charge utile 18 est un effecteur.

Par exemple, l'effecteur est une arme laser, une arme électromagnétique, un brouilleur ou un armement balistique.

Le dispositif de repérage 20 est propre à repérer le plan de pose 16 par rapport au corps 12.

Le dispositif de repérage 20 comporte une caméra 24 propre à prendre une image, l'image comportant la pluralité de points référencés.

Selon un cas particulier, le dispositif de repérage 20 comporte une caméra 24 propre à prendre une séquence d'images, séquence dans laquelle au moins une image comporte une pluralité de points référencés.

La caméra 24 présente ainsi un champ de vision englobant le corps 12 ou une partie du corps 12.

Le dispositif de repérage 20 comporte aussi un calculateur 26 propre à déterminer l'orientation angulaire du plan de pose 16 par rapport au corps 12.

Le fonctionnement du dispositif de repérage 20 est maintenant décrit en référence à une mise en œuvre d'un procédé de repérage, ou comme expliqué précédemment calcul de pose (position et attitude), du plan de pose 16.

Par l'expression « repérage » d'un plan de pose, il est entendu la détermination d'une position et d'une attitude de l'objet par rapport à un repère de référence.

En toute rigueur, une telle détermination comporte la détermination de six informations de localisation, trois informations angulaires et trois informations de position.

Les trois informations angulaires permettent de donner l'orientation, ou attitude, des axes du repère lié au plan de pose par rapport aux axes du repère de référence tandis que les trois informations de position sont les coordonnées du centre du repère lié au plan de pose dans le repère de référence.

Par extension, il est considéré qu'un repérage d'un plan de pose est effectué dès lors qu'au moins trois informations ont été déterminées si les trois autres sont connues avec une précision suffisante ou qu'elles ne sont pas indispensables pour l'objectif recherché.

Notamment, lorsque les trois informations sont angulaires, il est déterminé l'orientation angulaire ou l'attitude du plan de pose alors que quand les trois informations sont des informations de position, il est déterminé la position du plan de pose.

Le procédé de repérage comporte une étape de prise d'image(s) et une étape de détermination.

Lors de l'étape de prise d'image(s), la caméra 24 prend une vidéo d'images d'une partie du corps 12, l'image comportant les points référencés particuliers sur la structure.

Lors de l'étape de détermination, le calculateur 26 détermine l'orientation angulaire du plan de pose 16 par rapport au corps 12.

Pour cela, le calculateur 26 analyse la ou les images prises par la caméra 24, notamment avec extraction des éléments référencés 22 sur la structure, puis calcule la pose relative de la caméra 24, puis transfère la pose absolue sur la chaîne opto-mécanique.

Plus précisément, il est estimé la position des points référencés 22 dans le repère du plan image de la caméra 24 puis, la position du plan image de la caméra 24 par rapport au corps 12, puis la position du plan de pose 16 par rapport au corps 12 (matrice de passage statique en rotation entre la caméra 24 et le plan de pose 16).

De préférence, pour cela, une calibration a été réalisée préalablement et permet d'obtenir un lien entre la position des points référencés du corps 12 sur l'image et la caméra 24 par rapport au corps 12. La calibration est mémorisée par le calculateur 26 qui l'utilise à l'étape de détermination.

Le calculateur 26 détermine également la position du plan de pose 16 de manière similaire.

Le procédé de repérage permet donc de repérer avec précision et fiabilité le plan de pose 16 dans un repère lié au véhicule 10.

En outre, le procédé de repérage est aisé à mettre en œuvre puisque le procédé de repérage implique uniquement une caméra 24 et un calculateur 26.

Dans certains modes de réalisation, le calculateur 26 est un contrôleur déjà présent dans le véhicule 10, ce qui implique que seule la caméra 24 est à ajouter.

Les seules contraintes du procédé de repérage sont que le ou les éléments référencés 22 soient choisis pour permettre d'obtenir la précision souhaitée, et qu'il y ait dans tous les conditions rencontrées suffisamment d'éléments référencés 22 dans la scène acquise par la caméra 24 pour que le repérage puisse être établi.

Plusieurs agencements d'éléments référencés 22 sont illustrés en référence aux figures 2 à 4.

Selon l'exemple de la figure 2, deux éléments référencés 22A, 22B sont définis pour le corps 12.

Par le terme « référencé », il est entendu le fait que la position de chaque élément référencé 22A, 22B est connue avec précision par rapport au corps 12. De manière générale, la position de chaque élément référencé est connue avec une précision compatible avec le besoin pour la détermination de l'attitude ou de l'orientation angulaire du plan de pose 16.

Par exemple, la position du point référencé est connue à 1 millimètre près dans un repère lié au corps 12.

Dans le cas représenté, les éléments de référence 22A et 22B sont des éléments fixes du corps 12.

En outre, comme illustré sur la figure 2, les éléments de référence 22A et 22B sont situés sur le toit 30.

Dans l'exemple représenté, chaque élément de référence 22A, 22B comporte un socle 32 surmonté d'une bille 34.

A titre d'exemple, chaque bille 34 présente un diamètre de 10 millimètres.

Chaque élément 22A, 22B comporte une pluralité de points référencés.

Au moins deux points référencés présentent une distance supérieure ou égale à 1 mètre.

Il est également à noter qu'une telle distance est compatible avec les caractéristiques de la caméra 24 et de sa distance d'observation aux éléments de référence 22.

Selon l'exemple de la figure 3, quatre éléments référencés 22A, 22B, 22C et 22D sont définis pour le corps 12. Les quatre éléments référencés sont situés chacun à un bord respectif du toit 30.

Pour illustration, dans cette situation, les informations extraites et utilisées par le traitement dans le calculateur 26 seront les barycentres ponctuels des billes 34. L'algorithme d'estimation de pose de la caméra 24, utilisant N points, sera du type PNP pour 'Perspective N Points'.

Chaque élément référencé 22A, 22B, 22C et 22D présente un contraste marqué, occasionnant un bon rapport signal à bruit dans l'image, de façon à être extrait facilement et rapidement par le traitement. Chaque élément référencé 22A, 22B, 22C et 22D est, par exemple, des éléments émetteurs comme une diode laser ou une diode électroluminescente ou tous éléments passifs ayant une émissivité différente de son environnement pour une prise d'image en infrarouge, un contraste important ou une couleur bien définie.

Dans le cas de la figure 4, chaque élément référencé 22A et 22B est une arête de la structure du corps 12. Autrement formulé, le corps 12 est délimité par des contours, les éléments référencés étant des contours du corps 12 du véhicule 10.

Selon l'exemple proposé, chaque élément référencé 22A et 22B est une arête de la structure du corps 12 visible depuis la caméra 24 avec un contraste suffisant dans l'image.

A titre d'exemple, dans cette situation, les informations extraites et utilisées par le traitement dans le calculateur 26 seront des segments extraits et appariés aux arêtes du modèle référencé pour le corps 12, modèle adressant pour le moins l'ensemble de la partie supérieure du véhicule 10 visible depuis la caméra 24. L'algorithme d'estimation de pose de la caméra 24, utilisant N segments, sera du type PNL pour 'Perspective N Lines'.

Dans un tel cas, le calculateur 26 est propre à analyser des points caractéristiques reconnaissables ou des lignes remarquables du corps 12 du véhicule 10 sur une image prise par la caméra 24. Pour cela, le calculateur 26 met en œuvre des algorithmes d'extraction de contour ou de caractéristiques, c'est-à-dire des algorithmes permettant d'extraire des éléments caractéristiques reconnaissables qui peuvent être appariés avec une base de données de points caractéristiques connus du véhicule 10 et pour lesquels la position dans le repère du corps 12 est connue. A cette fin, il peut être utilisé des extracteurs connus de contours ou de segments.

Selon un exemple particulier, le traitement d'estimation de pose fonctionne avec une phase d'initialisation, ou d'accrochage, consistant à déterminer la pose avec une première image puis un fonctionnement différentiel, avec un tracking, à plus haute cadence lors duquel les appariements sont réalisés entre les structures extraites de la vidéo, autorisant ainsi une recherche sur de plus faibles horizon d'appariement.

Par ailleurs, le nombre de points référencés varie selon les modes de réalisation envisagés. Par exemple, le nombre de points référencés est supérieur ou égal à 3.

Pour une observation limitée à un nombre de 1 ou 2 points, l'information est insuffisante pour déterminer les six paramètres de pose avec un estimateur classique de type moindres-carrés ; le calculateur 26 utilise alors un estimateur bayésien de type batch ou Kalman, exploitant l'information a priori portée par les mesures de position et d'attitude approchées du plateau (via la centrale de navigation 38 et la commande de mât) pour inférer, au moyen des observations des éléments référencés 22, la pose de la caméra 24 ainsi que son erreur. En fixant la position de la caméra 24 d'après les mesures, il est possible d'estimer l'attitude de la caméra 24 au moyen de deux points avec un algorithme déterministe de type TRIAD.

Selon un mode de réalisation, le procédé comporte une approche bayésienne, utilise des valeurs a priori, c'est-à-dire des valeurs et des erreurs approchées pour ces six informations. L'estimation raffine les valeurs des six informations à partir des coordonnées image des éléments référencés.

Un intérêt de l'estimation bayésienne est d'améliorer les six informations précédentes dès lors que l'on dispose d'au moins un élément référencé dans l'image.

Compte tenu des mesures disponibles et des connaissances respectives a priori des 6 informations : l'azimut (yaw) de la caméra est ici l'information la plus critique en vue de caractériser l'attitude d'une charge utile disposée sur le plan pose, suivent les 2 autres angles (pitch, roll) pour caractériser au final l'assiette du plan de pose, puis la hauteur de la caméra dans le repère des éléments de référence pour caractériser la hauteur du plan de pose, l'estimation de la position planimétrique de la caméra apportera une information moindre pour le processus puisque cette information est connue avec une précision suffisante (de la classe 10 centimètres) en regard de l'objectif visé de performance. Si les erreurs a priori sur la position caméra et les angles pitch et roll décrivant son assiette sont connus avec une meilleure qualité que l'azimut (yaw) de l'image, l'utilisation d'un unique élément de référence dans une estimation bayésienne conduira à une modification privilégié de l'azimut de la caméra en regard des autres valeurs a priori.

Il est à noter que le procédé permet aussi d'estimer des informations ou paramètres internes à la caméra comme sa distance focale ou sa distorsion. L'estimation de ces informations avec une qualité suffisante implique l'observation d'éléments référencés en quantité supplémentaire. L'intérêt à estimer la focale réside dans une évaluation plus fine de l'élévation de la caméra et donc du plan de pose. L'estimation et l'exploitation de la distorsion de l'image permet de prédire plus finement les positions des éléments de référence.

Les informations ainsi obtenues par le procédé de repérage peuvent avantageusement être utilisées pour plusieurs applications.

Trois exemples d'application sont décrits plus précisément dans ce qui suit.

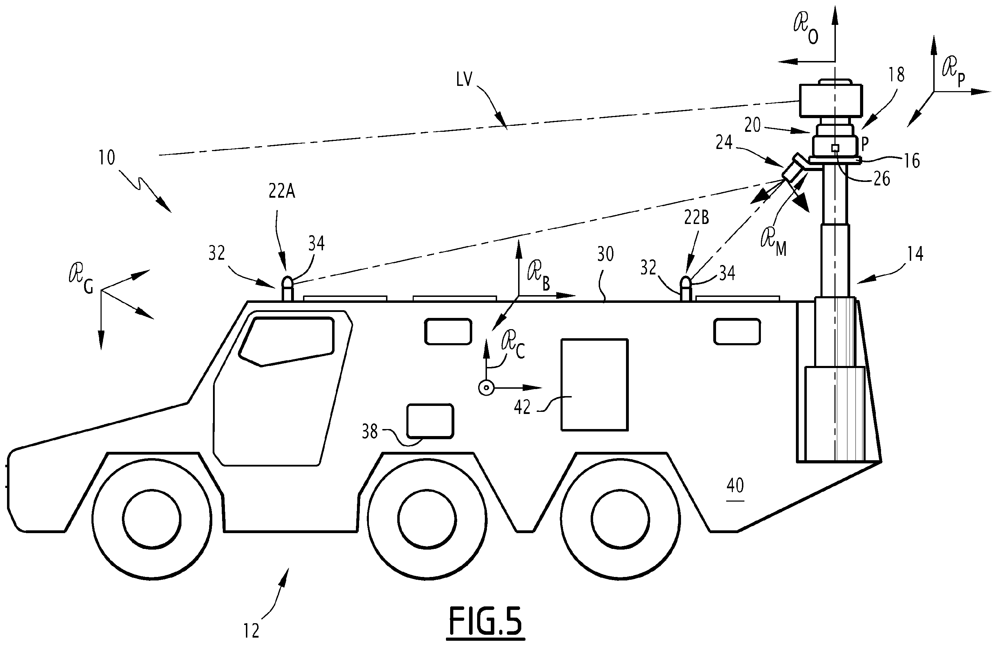

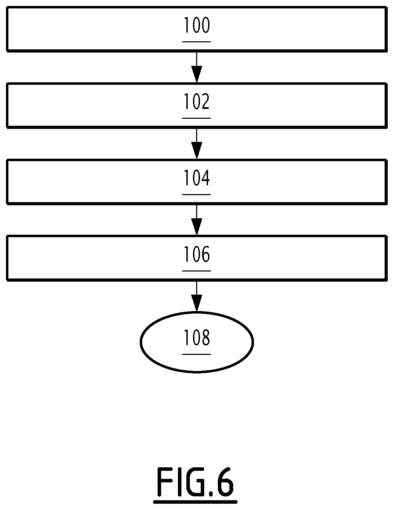

Selon un premier exemple d'application, il est décrit un procédé d'obtention de l'orientation angulaire d'une ligne de visée LV de la charge utile 18 du véhicule 10 représenté à la figure 5 par rapport au nord géographique en référence à l'ordinogramme de la figure 6.

Le véhicule 10 de la figure 5 correspond au véhicule 10 décrit en référence à la figure 1.

Le procédé d'obtention comporte alors une étape de mesure 100, une étape de mise en œuvre 102, une étape d'obtention 104 et une étape de calcul 106.

Lors de l'étape de mesure 100, il est mesuré l'orientation angulaire du corps 12 par rapport au nord géographique pour obtenir une orientation mesurée.

Ceci correspond à un simbleautage du système de mesure.

A titre d'exemple, l'étape de mesure 100 est mise en œuvre à l'aide d'une centrale de navigation 38 que comporte le corps 12 du véhicule 10.

Selon l'exemple illustré, la centrale de navigation 38 est propre à fournir une orientation du corps 12 par rapport au nord géographique avec une précision inférieure à 5 milliradians, de préférence 1 milliradian. La centrale de navigation 38 est dans un volume intérieur 40 délimité par le corps 12. De préférence, la centrale de navigation 14 est solidaire du corps 12. Dans un mode de réalisation plus élaboré, la relation entre la mesure de la centrale de navigation 38 et l'orientation du corps 12 du véhicule 10 par rapport au nord géographique est mesurée en usine de sorte qu'une table de correspondance est mémorisée dans un contrôleur central 42 (autrement formulé, l'orientation absolue du corps 12 du véhicule 10 est calculée à partir des matrices de passage entre le repère $\mathcal{R}_C$, de la centrale de navigation 38 et un repère $\mathcal{R}_B$, lié au corps 12 du véhicule 10). La table de correspondance est utilisée par le contrôleur central 42 pour déterminer l'orientation du corps 12 du véhicule 10.

Toutefois, toute technique permettant de repérer le corps 12 par rapport au nord géographique est utilisable. Par exemple, la combinaison d'un système GPS avec un repérage par des amers peut être utilisée. A l'issue de l'étape de mesure 100, il est ainsi obtenu un repérage du repère $\mathcal{R}_B$, lié au corps 12 dans un repère géographique $\mathcal{R}_G$.

Lors de l'étape de mise en œuvre 102, il est mis en œuvre les étapes du procédé de repérage précédemment décrit afin d'obtenir notamment l'attitude ou l'orientation angulaire du plan de pose 16 par rapport au corps 12 caractérisé par la matrice d'attitude $R_M^B$.

Cela signifie qu'à l'issue de l'étape de mise en œuvre 102, connaissant les transformations de $\mathcal{R}_M$ à $\mathcal{R}_P$, il est possible de repérer chacun des axes du repère $\mathcal{R}_P$ lié au plan de pose 16 par rapport à chacun des axes du repère $\mathcal{R}_B$ lié au corps 12.

Lors de l'étape d'obtention 104, il est obtenu l'attitude de la caméra 24 ou l'orientation angulaire de la ligne de visée LV dans le repère $\mathcal{R}_P$ lié au plan de pose 16.

Par exemple, pour une charge utile, la position de la ligne de visée LV est souvent contrôlée par des organes mécaniques tels qu'un positionneur. L'étape d'obtention 106 est alors mise en œuvre en collectant les lois de commande desdits organes mécaniques.

Lors de l'étape de calcul 106, il est calculé l'attitude ou l'orientation angulaire des axes de référence, par exemple une ligne de visée LV pour un senseur optronique, de la charge utile 18 par rapport au nord géographique à partir de l'orientation mesurée dans $\mathcal{R}_O$.

Pour cela, il est utilisé l'orientation mesurée, l'orientation angulaire du plan de pose 16 par rapport au corps 12 et l'orientation angulaire de la ligne de visée LV dans un repère $\mathcal{R}_P$ lié au plan de pose 16.

Les formules de calcul utilisées à l'étape de calcul 106 sont détaillées comme suit.

De manière générique, il est désigné par $\mathcal{R}_k$ le repère associé au cardant 'k' de la chaîne ; par $\overrightarrow{IK}$ le vecteur translation permettant de passer de l'origine de $\mathcal{R}_i$ à l'origine de $\mathcal{R}_k$ ; par $R_i^k$ la rotation de passage entre leurs axes et $\overrightarrow{u_k}$ une direction exprimée dans $\mathcal{R}_k$. Les transformations liant une direction $\overrightarrow{u_G}$ du repère géographique local $\mathcal{R}_G$ à une direction $\overrightarrow{u_O}$ du repère $\mathcal{R}_O$ de la charge utile se décrivent d'après les transformations :

- entre le repère géographique local $\mathcal{R}_G$, et le repère lié à la centrale de navigation 38 $\mathcal{R}_C$, l'expression suivante est vérifiée $\overrightarrow{u_G} = R_C^G \, \overrightarrow{u_C} + \overrightarrow{CG}$ ; dans cette expression les trois angles caractérisant l'attitude $R_C^G$ et les trois composantes de position du vecteur $\overrightarrow{CG}$ sont mesurés par la centrale de navigation 38.

- entre le repère $\mathcal{R}_C$ de la centrale de navigation 38 et le repère $\mathcal{R}_B$ lié au corps 12 ('B' comme body), on a $\overrightarrow{u_C} = R_B^C \, \overrightarrow{u_B} + \overrightarrow{BC}$ ; dans cette expression la rotation $R_B^C$ du corps 12 et le bras de levier BC sont mesurés via une mesure d'harmonisation ou simbleautage en usine lors de la pose de la centrale de navigation 38 dans le véhicule 10 ou in-situ en disposant d'une charge utile observant des amers dans la scène avec une étape d'auto-calibration;

- entre le repère body $\mathcal{R}_B$ et le repère $\mathcal{R}_M$ associé à la caméra 24, on a $\overrightarrow{u_B} = R_M^B \, \overrightarrow{u_M} + \overrightarrow{MB}$ où la position $\overrightarrow{MB}$ et l'attitude $R_M^B$ de la caméra 24 relativement au corps 12 sont obtenues lors du processus d'estimation de pose dans le calculateur 26. La cadence de mise à jour de la pose est cohérente de l'objectif de performance en regard du domaine de déplacement du plan de pose 16, ceci en jouant sur :

  o la fréquence de traitement de la vidéo par le calculateur 26,
  o la configuration géométrique des éléments référencés 22 sur le véhicule 10,
  o le type de structures référencées utilisées,
  o la limitation éventuelle de zones sur lesquelles les structures référencées sont recherchées d'une image à l'autre.

- entre le repère $\mathcal{R}_M$ et le repère $\mathcal{R}_P$ du plan de pose 16, on a : $\overrightarrow{u_M} = R_P^M \, \overrightarrow{u_P} + \overrightarrow{PM}$. Cette transformation rigide est calibrée en usine lors du montage de la caméra 24 sur le plateau par un moyen opto-mécanique ou en ligne en utilisant une charge utile optronique observant des amers dans la scène.

- entre le repère $\mathcal{R}_P$ du plan de pose 16 et le repère $\mathcal{R}_O$ lié aux axes de référence de la charge utile, on a : $\overrightarrow{u_P} = R_O^P \, \overrightarrow{u_O} + \overrightarrow{OM}$ dans cette expression, l'attitude est essentiellement mesurée par un organe monté sur le plateau permettant d'orienter la charge utile tout en mesurant son déplacement relatif ; la translation ainsi qu'un incrément d'attitude sous forme de rotations élémentaires sont déterminées par calibration et la rotation de la charge utile 18 par codeur ou mesure d'un dispositif type pan & tilt par exemple.

Au global en substituant les expressions des transformations sur les différents cardans :

$$\overrightarrow{u_G} = \overrightarrow{CG} + R_C^G \left( \overrightarrow{BC} + R_B^C \left( \overrightarrow{MB} + R_M^B \left( \overrightarrow{PM} + R_P^M \left( \overrightarrow{OM} + R_O^P \, \overrightarrow{u_O} \right) \right) \right) \right)$$

Soit $\overrightarrow{u_G} = R_O^G \, \overrightarrow{u_O} + \overrightarrow{OG}$ avec pour la translation globale :

$$\overrightarrow{OG} = \overrightarrow{CG} + R_C^G \, \overrightarrow{BC} + R_C^G \, R_B^C \overrightarrow{MB} + R_C^G \, R_B^C R_M^B \overrightarrow{PM} + R_C^G \, R_B^C R_M^B R_P^M R_O^P \overrightarrow{OM}$$

Et pour l'attitude :

$$R_O^G = R_C^G \, R_B^C \, R_M^B \, R_P^M \, R_O^P$$

Au niveau de la caméra 24, la direction spatiale correspondant à un pixel (**p, q**) de l'image lié en particulier à la détection d'une structure 22 sur le corps 12, s'exprime en utilisant la colinéarité entre le trajet des photons dans le repère $\mathcal{R}_M$ associé à la caméra 24 et le repère body $\mathcal{R}_B$ par :

$$\overrightarrow{u_M} = K_{24}(1 \quad p \quad q)^T.$$

Où $K_{24}$ désigne la matrice 3x3 de calibration de la caméra 24 faisant intervenir sa focale, la taille de ses détecteurs, les coordonnées de son point principal image, un rapport d'échelle si les pixels ont des dimensions différentes suivant les lignes et les colonnes. Si nécessaire, une distorsion de l'optique sera prise en compte à ce niveau afin de corriger le déplacement des détections extraites de l'image. Cette distorsion peut soit être connue d'après une calibration usine de la caméra 24 soit être estimée in-situ dès lors que les structures de référence 22 sont en nombre suffisant dans l'image.

Une relation identique peut être utilisée, notamment à des fins de calibration de bras de levier dans la chaîne ou de localisation d'objet de la scène, lorsque la charge utile dispose d'une caméra optronique de matrice de calibration $K_{18}$ ; au niveau de cette caméra la direction $\overrightarrow{u_O}$ sera obtenue pour un pixel ($u$, $v$) de son image par $\overrightarrow{u_O} = K_{18}(1\ u\ v)^T$, qui exprime encore la colinéarité entre le trajet des photons dans le repère de la charge utile $\mathcal{R}_O$.

Notons que les expressions précédentes permettent aussi d'établir le bilan de performance pour la chaîne. En effet :

- un biais sur la direction est caractérisé d'après les biais élémentaires sur la direction d'origine et sur les rotations élémentaires avec :

$$\delta\overrightarrow{u_G} = \delta R_O^G.\overrightarrow{u_O} + R_O^G.\delta\overrightarrow{u_O} + \delta\overrightarrow{OG}$$

- un bruit sur la direction est caractérisé d'après la matrice de covariance :

$$\Lambda_{\overrightarrow{u_G}} = E\left[\delta\overrightarrow{u_G}.\delta\overrightarrow{u_G}^T\right] = E\left[\delta R_O^G.\delta R_O^{G^T}\right] + R_O^G.E\left[\delta\overrightarrow{u_O}.\delta\overrightarrow{u_O}^T\right].R_O^{G^T} + E\left[\delta\overrightarrow{OG}.\delta\overrightarrow{OG}^T\right] \ ;$$

où :

    ○ $E\left[\delta R_O^G.\delta R_O^{G^T}\right] = \Lambda_{R_O^G}$ est la covariance sur la rotation, obtenue comme une expression de somme de produits de matrices rotation et de matrices de covariance des rotations de la chaîne,

    ○ $E[\delta\overrightarrow{u_O}.\delta\overrightarrow{u_O}^T] = \Lambda_{\overrightarrow{u_O}}$ est la matrice de covariance sur la direction d'intérêt au niveau de la charge utile

    ○ $E[\delta\overrightarrow{OG}.\delta\overrightarrow{OG}^T] = \Lambda_{\overrightarrow{OG}}$ est la matrice de covariance sur la translation entre les origines des repères $\mathcal{R}_O$ et $\mathcal{R}_G$ obtenue à partir de l'expression de la translation comme combinaison de somme de matrices de covariance de translation chacune faisant intervenir une matrice de covariance de position relative ou translation et des produits de matrices de rotations et de leurs covariances.

Concernant la qualité de l'estimation de pose de la caméra 24, le biais et la covariance de la transformation $R_M^B$ et la translation $\overrightarrow{MB}$, s'obtiennent en écrivant les relations de colinéarité avec les coordonnées des différentes marques, puis en différentiant ces équations comme indiqué dans la suite. Les contributions à ces erreurs sont :

- les erreurs d'extraction des structures 22 dans l'image
- le nombre de structures 22,
- la configuration géométrique ou disposition relative des structures 22,
- les conditions de prises de vue de la caméra 24 fixées d'après les 6 paramètres de translation et de rotation dans le repère $\mathcal{R}_M$ associé à la caméra 24,
- les caractéristiques et l'erreur sur la matrice de calibration $K_{24}$.

Il est à noter que les valeurs de certains paramètres de $K_{24}$ peuvent être déterminées lors du processus d'estimation de pose ainsi que leur erreur par cette approche. Pour disposer d'une bonne estimation de la translation, il est notamment nécessaire d'estimer la focale avec une précision relative du même ordre que la précision relative sur l'erreur de translation souhaitée. Par exemple, si l'on souhaite connaitre la hauteur du plateau situé à 2 mètres avec une précision de 1 centimètre, il faut viser une estimation de la focale de classe 1/200.

Avec un modèle imageur perspectif, ou sténopé, respectant la relation de colinéarité pour la prise de vue avec la caméra 24, soit d'après les relations et notations précédentes, en notant ($X_n$, $Y_n$, $Z_n$) les coordonnées cartésiennes de la référence 'n' observée dans $\mathcal{R}_B$, ($p_n$, $q_n$) ses coordonnées image et $\overrightarrow{MB} = (X_0, Y_0, Z_0)$ les coordonnées du centre optique de la caméra 24 :

$$\begin{pmatrix} X_n - X_0 \\ Y_n - Y_0 \\ Z_n - Z_0 \end{pmatrix} = \lambda_n . R_M^B \, K_{24} \begin{pmatrix} 1 \\ p_n \\ q_n \end{pmatrix}$$

L'élimination de $\lambda_n$ peut se faire avec la troisième relation et en reportant dans les deux premières, on obtient deux équations, pour chaque élément référencé 22, liant les coordonnées image et cartésiennes des éléments référencés 22, les six paramètres de prise de vue ($X_0$, $Y_0$, $Z_0$) et les trois angles d'Euler ($\varphi_0$, $\theta_0$, $\psi_0$) caractérisant la rotation $R_M^B$, les paramètres internes dans $K_{24}$. Les mesures, notées M, sont constituées des coordonnées cartésiennes des éléments référencés 22 dans $\mathcal{R}_B$ et de leur coordonnées images ($p_n$, $q_u$).

Il est alors possible de calculer l'erreur sur les paramètres internes et externes estimés, notés $\Theta$, à partir des coordonnées des éléments référencés 22 en fonction des erreurs sur les coordonnées cartésiennes des éléments référencés 22 et leurs erreurs sur leurs coordonnées extraites dans l'image.

Pour évaluer la qualité accessible sur les paramètres à estimer '$\Theta$' selon la configuration des mesures 'M', on utilise la technique d'analyse de la moyenne et de la variance, ou propagation de covariance. Pour ce faire, les étapes suivantes sont mises en œuvre :

1. noter la relation de colinéarité sous une forme générale $\Xi(\Theta, M) = 0$.
2. différentier cette expression pour écrire: $d\Xi(\Theta, M) = J_\Theta d\Theta + J_M dM = 0$, expression dans laquelle $J_\Theta$ est la matrice jacobienne de $\Xi$ relativement aux paramètres $\Theta$ et $J_M$ la matrice jacobienne de $\Xi$ relativement aux mesures M.
3. Cette expression permet de calculer un biais sur les paramètres $\delta\Theta$ lié à un biais sur les mesures $\delta M$ avec :

$$J_\Theta d\Theta = -J_M dM$$

soit :

$$d\Theta \delta\Theta = -\left(J_\Theta^T J_\Theta\right)^{-1} J_\Theta^T J_M dM \delta M$$

4. multiplier chaque membre de $J_\Theta d\Theta = -J_M dM$, par sa quantité transposée,

$$J_\Theta d\Theta d\Theta^T J_\Theta^T = -J_M dM dM^T J_M^T$$

5. prendre l'espérance, pour obtenir la covariance sur les paramètres $\Lambda_\Theta$ en fonction de la covariance sur les mesures $\Lambda_M$ :

$$J_\Theta \Lambda_\Theta J_\Theta^T = -J_M d\Lambda_M J_M^T$$

6. dimensionner ainsi le processus selon le nombre et le positionnement des marques sur la structure ainsi que les conditions de prise de vue de la caméra 24 dans $\mathcal{R}_B$ au moyen de la covariance suivante :

$$\Lambda_\Theta = -\left(J_\Theta^T J_\Theta\right)^{-1} J_\Theta^T J_M d\Lambda_M J_M^T J_\Theta \left(J_\Theta^T J_\Theta\right)^{-1}$$

Pour estimer les paramètres on utilise l'expression $G(\Theta, M) = 0$, et distinguant :

- dans les paramètres $\Theta$, les paramètres à estimer $\Theta_E$ de l'ensemble des autres paramètres non-estimés $\Theta_A$ pour lequel on utilise une valeur de calibration ou une mesure.
- dans les mesures M, celles issues de la connaissance du modèle véhicule constituées des coordonnées des éléments référencés 22 dans le repère body notées $M_B$, des mesures $M_I$ constituées des coordonnées extraites de l'image. Il vient :

$$G(\Theta_E, \Theta_A, M_I, M_B, M_A) = 0$$

Une approche estimant les paramètres $\Theta_E$ en exploitant les informations a priori de façon à minimiser les écarts entre les détections images $M_I$ et leur reprojection de leurs coordonnées $M_B$ d'après le modèle de prise de vue de 24 se fait en utilisant une distribution de probabilité gaussienne des paramètres et des mesures ainsi que la règle des bayésienne sur leurs distributions de probabilité F :

$$F(\Theta_E, \Theta_A, M_B | M_I) = \frac{F(M_I | \Theta_E, \Theta_A, M_B) F(\Theta_E) F(\Theta_A) F(M_B)}{F(M_I)}$$

Les paramètres $\Theta_E$ s'obtiennent d'après :

$$\Theta_E = arg \underbrace{max}_{\Theta_E} F(\Theta_E, \Theta_A, M_B | M_I)$$

Concernant le choix de paramètres à estimer dans le modèle de prise de vue, il est possible d'estimer uniquement les trois paramètres de la rotation (caméra calibrée et hauteur caméra connue), les six paramètres de la rotation et de la position caméra, ou les sept paramètres en ajoutant la focale de la caméra 24 aux 6 derniers paramètres, voire davantage avec au moins un coefficient de distorsion radiale si on estime la distorsion de la caméra 24 par exemple.

Le procédé d'obtention permet ainsi de repérer la ligne de visée LV par rapport au nord géographique comme montré schématiquement par la référence 108 sur la figure 6.

Le procédé d'obtention est ainsi un transfert opto-mécanique d'une information relative au corps 12 vers le plan de pose 16. Le procédé d'obtention permet de conserver une bonne qualité d'information.

Il en résulte qu'avec une seule centrale de navigation 38, il est possible de repérer le nord géographique pour le corps 12 et les axes de référence de la charge utile 18 avec une bonne précision.

Pour une charge utile type senseur optronique, dès lors que les caractéristiques internes du senseur optronique de la charge utile sont connues (caméra calibrée), il est possible, connaissant l'orientation de la LV de déterminer la direction absolue relativement au nord géographique de tout pixel des images et donc de tout objet de la scène en bénéficiant de la performance obtenue sur la direction de la LV.

Le véhicule 10 en résultant est plus simple à réaliser qu'un véhicule qui serait pourvu de deux centrales de navigation, une première centrale de navigation pour le corps et une deuxième centrale de navigation pour la charge utile. De fait, pour cela, il convient notamment que la deuxième centrale de navigation soit co-localisée et/ou montée mécaniquement de manière rigide par rapport à la charge utile. Bien que cela soit possible techniquement et que cela fonctionnerait, dans la pratique, cela est très difficile et coûteux de réaliser. En effet, il se pose notamment une problématique de masse d'emport et de volume disponible. Ces problématiques sont résolues par le véhicule 10 qui comporte uniquement une centrale navigation 38 et un dispositif de repérage 20.

Selon un deuxième exemple, il est décrit un procédé d'obtention de l'orientation angulaire d'un corps par rapport au nord géographique.

Le procédé d'obtention comporte alors une étape de mesure, une étape de mise en œuvre et une étape de calcul.

Lors de l'étape de mesure, il est mesuré l'orientation angulaire du plan de pose 16 par rapport au nord géographique pour obtenir une orientation mesurée dans le repère géographique $\mathcal{R}_G$.

A titre d'exemple, l'étape de mesure est mise en œuvre à l'aide d'une centrale de navigation située dans le mât 14.

Toutefois, toute technique permettant de repérer le plan de pose 16 par rapport au nord géographique est utilisable. Par exemple, la combinaison d'un système GPS avec un repérage par des amers peut être utilisée.

A l'issue de l'étape de mesure, il est ainsi obtenu un repérage du repère $\mathcal{R}_P$ lié au plan de pose 16 dans un repère géographique $\mathcal{R}_G$.

Lors de l'étape de mise en œuvre, il est mis en œuvre les étapes du procédé de repérage précédemment décrit afin d'obtenir l'orientation angulaire du corps 12 par rapport au plan de pose 16 et donc connaitre l'orientation du repère $\mathcal{R}_P$ lié au plan de pose relativement au repère géographique $\mathcal{R}_G$ en utilisant les informations de la centrale 38.

Cela signifie qu'à l'issue de l'étape de mise en œuvre, il est possible de repérer chacun des axes du repère $\mathcal{R}_B$ lié au corps 12 par rapport à chacun des axes du repère $\mathcal{R}_P$ lié au plan de pose 16.

Lors de l'étape de calcul, il est calculé l'orientation du corps 12 par rapport au nord géographique.

Dans ce deuxième exemple d'application, une seule centrale de navigation située dans le mât 14 permet de repérer à la fois le plan de pose 16 et le corps 12 par rapport au nord géographique. Cette fois c'est la pose du repère $\mathcal{R}_B$ lié au corps 12 relativement au repère $\mathcal{R}_P$ lié au plan de pose, qui est déterminée à l'inverse du premier exemple l'application.

Selon un troisième exemple d'application, la disposition d'une centrale de navigation 38 dans le véhicule 10 et d'une centrale de navigation en haut du mât 14 hybrident leurs mesures inertielles avec les informations de vision extraites par la caméra 24.

Il est également à noter que, selon les exemples d'application, la centrale de navigation 38 est montée sur le dispositif de repérage 20 ou dans le volume intérieur 40 du véhicule 10.

Le procédé de repérage est ainsi utilisable à toute configuration pour laquelle un transfert précis de la mesure d'une position ou d'attitude d'une partie d'un véhicule 10 dans un repère géographique $\mathcal{R}_G$ vers une autre partie est souhaité.

Le procédé de repérage présente, en outre, l'avantage d'être adapté pour une grande amplitude angulaire et une grande amplitude en translation.

Typiquement, le procédé de repérage est adapté pour procurer une couverture angulaire en azimut supérieure ou égale à 180° voire égale à 360°.

Le procédé de repérage permet aussi de repérer un plan de pose 16 pour une amplitude angulaire en élévation d'au moins 30° voire plus de 90°.

Le procédé de repérage permet d'obtenir de telles performances avec un dispositif de repérage 20 très simple. En particulier, la caméra 24 n'est pas omnidirectionnelle et peut être un senseur SWaP-C (sigle renvoyant à la dénomination anglaise de « low size weight power and cost » signifiant littéralement faible taille masse puissance et consommation) et un seul élément référencé 22.

**Revendications**

1. Procédé de repérage d'une face supérieure de la tête d'un mât (14), la face supérieure étant destinée à supporter au moins une charge utile (18) présentant une partie fixe, le mât (14) faisant partie d'un véhicule (10) comportant un corps (12), la position ou l'attitude du corps (12) dans un repère géographique étant connue, au moins un élément référencé (22, 22A, 22B, 22C, 22D) étant défini pour le corps (12), chaque élément référencé (22, 22A, 22B, 22C, 22D) comportant une pluralité de points référencés, la position de chaque point référencé étant connue à 1 millimètre près dans un repère lié au corps (12), le procédé étant mis en œuvre par un dispositif de repérage (20), le dispositif de repérage (20) étant disposé sur la face supérieure de la tête du mât (14) ou sur la partie fixe de la charge utile (18), le dispositif de repérage (20) comportant une caméra (24) et un calculateur (26), le procédé de repérage comportant au moins une étape de :

   - prise d'une image par la caméra (24), l'image comportant les points référencés,
   - détermination, par le calculateur (26), de l'orientation angulaire ou de l'attitude de la face supérieure de la tête du mât (14) par rapport au corps (12) à partir de l'image, pour obtenir une orientation ou une attitude déterminée, et
   - calcul de l'orientation angulaire ou de l'attitude de la face supérieure de la tête du mât (14) dans le repère géographique à partir de l'orientation ou de l'attitude déterminée.

2. Procédé de repérage selon la revendication 1, dans lequel, lors de l'étape de détermination, il est également déterminé la position de la face supérieure de la tête du mât (14) par rapport au corps (12).

3. Procédé de repérage selon la revendication 2, dans lequel, lors de l'étape de détermination, il est utilisé une calibration réalisée préalablement, la calibration établissant un lien entre la position des points référencés du corps (12) sur l'image et la position de la caméra (24) par rapport au corps (12).

4. Procédé de repérage selon l'une quelconque des revendications 2 à 4, dans lequel, le procédé comporte une étape d'estimation permettant notamment de déterminer les six informations caractérisant la position et l'attitude de la face supérieure de la tête du mât (14).

5. Procédé de repérage selon la revendication 4, dans lequel le procédé comporte une étape d'estimation bayésienne des six informations utilisant au moins un point référencé

6. Procédé de repérage selon l'une quelconque des revendications 1 à 5, dans lequel le corps (12) est délimité par des contours et présente des éléments caractéristiques identifiables, le ou les éléments référencés (22, 22A, 22B, 22C, 22D) étant dans le groupe constitué des contours du corps (12), des éléments caractéristiques du corps (12) du véhicule (10), des diodes laser et des diodes électroluminescentes.

7. Procédé de repérage selon l'une quelconque des revendications 1 à 6, dans lequel au moins deux points référencés présentent une distance supérieure ou égale à 1 mètre.

8. Procédé d'obtention de l'orientation angulaire d'une ligne de visée (LV) d'une charge utile (18) par rapport au nord géographique, la charge utile (18) étant fixée sur une face supérieure de la tête d'un mât (14), la charge utile (18) présentant une partie fixe, le mât (14) faisant partie d'un véhicule (10) comportant un corps (12) pour lequel au moins un élément référencé (22, 22A, 22B, 22C, 22D) est défini, chaque élément référencé (22, 22A, 22B, 22C, 22D) comportant une pluralité de points référencés, le véhicule (10) comportant, en outre, un dispositif de repérage (20), le dispositif de repérage (20) étant disposé sur la face supérieure de la tête du mât (14) ou sur la partie fixe de la charge utile (18), le dispositif de repérage (20) comportant une caméra (24) et un calculateur (26), le procédé comportant au moins une étape de :

- mesure de l'orientation angulaire du corps (12) par rapport au nord géographique pour obtenir une orientation mesurée,
- mise en œuvre des étapes d'un procédé de repérage selon l'une quelconque des revendications 1 à 7, pour obtenir l'orientation angulaire de la face supérieure de la tête d'un mât (14) par rapport au corps (12),
- obtention de l'orientation angulaire de la ligne de visée (LV) dans un repère ($R_P$) lié à la face supérieure de la tête du mât (14), et
- calcul de l'orientation angulaire de la ligne de visée (LV) de la charge utile (18) par rapport au nord géographique à partir de l'orientation mesurée, de l'orientation angulaire de la face supérieure de la tête du mât (14) par rapport au corps (12) et de l'orientation angulaire de la ligne de visée (LV) dans un repère ($\mathcal{R}_P$) lié à la face supérieure de la tête du mât (14).

9. Procédé d'obtention de l'orientation angulaire d'un corps (12) par rapport au nord géographique, au moins un élément référencé (22, 22A, 22B, 22C, 22D) étant défini pour le corps (12), chaque élément référencé (22, 22A, 22B, 22C, 22D) comportant une pluralité de points référencés, le corps (12) faisant partie d'un véhicule (10) comportant un mât (14) comportant une tête présentant une face supérieure, la face supérieure étant destinée à supporter au moins une charge utile (18) présentant une partie fixe, le véhicule (10) comportant, en outre, un dispositif de repérage (20), le dispositif de repérage (20) étant disposé sur la face supérieure de la tête du mât (14) ou sur la partie fixe de la charge utile (18), le dispositif de repérage (20) comportant une caméra (24) et un calculateur (26), le procédé comportant au moins une étape de :

- mesure de l'orientation angulaire de la face supérieure de la tête du mât (14) par rapport au nord géographique pour obtenir une orientation mesurée,
- mise en œuvre des étapes d'un procédé de repérage selon l'une quelconque des revendications 1 à 7, pour obtenir l'orientation angulaire du corps (12) par rapport à la face supérieure de la tête du mât (14), et
- calcul de l'orientation du corps (12) par rapport au nord géographique à partir de l'orientation mesurée et de l'orientation angulaire.

10. Procédé d'obtention de l'orientation angulaire selon la revendication 8 ou 9, dans lequel le véhicule (10) est pourvu d'une centrale de navigation (38), l'étape de mesure de l'orientation angulaire étant mise en œuvre à partir de données issues de la centrale de navigation (38).

11. Dispositif de repérage (20) d'une face supérieure de la tête d'un mât (14), la face supérieure étant destinée à supporter au moins une charge utile (18) présentant une partie fixe, le mât (14) faisant partie d'un véhicule (10) comportant un corps (12), la position ou l'attitude du corps (12) dans un repère géographique étant connue, au moins un élément référencé (22, 22A, 22B, 22C, 22D) étant défini pour le corps (12), chaque élément référencé (22, 22A, 22B, 22C, 22D) comportant une pluralité de points référencés, la position de chaque point référencé étant connue à 1 millimètre près dans un repère lié au corps (12), le dispositif de repérage (20) étant disposé sur la face supérieure de la tête du mât (14) ou sur la partie fixe de la charge utile (18), le dispositif de repérage (20) comportant :

- une caméra (24) propre à prendre une image, l'image comportant la pluralité de points référencés, et
- un calculateur (26) propre à déterminer l'orientation angulaire de la face supérieure de la tête du mât (14) par rapport au corps (12) à partir de l'image pour obtenir une orientation ou une attitude déterminée, le calculateur (26) étant, en outre, propre à calculer l'orientation angulaire ou de l'attitude de la face supérieure de la tête du mât (14) dans le repère géographique à partir de l'orientation ou de l'attitude déterminée.

12. Véhicule (10) comportant :

- un corps (12) pour lequel au moins un élément référencé (22, 22A, 22B, 22C, 22D) est défini, chaque élément référencé (22, 22A, 22B, 22C, 22D) comportant une pluralité de points référencés, la position de chaque point référencé étant connue à 1 millimètre près dans un repère lié au corps (12),
- un mât (14) comportant une tête présentant une face supérieure, la face supérieure étant destinée à supporter au moins une charge utile (18), et
- un dispositif de repérage (20) selon la revendication 11.

**Patentansprüche**

1. Verfahren zum Orten einer Oberseite des Kopfs eines Masts (14), wobei die Oberseite dazu bestimmt ist, mindestens eine Nutzlast (18) zu tragen, die einen festen Teil aufweist, wobei der Mast (14) Teil eines Fahrzeugs (10) ist, umfassend einen Körper (12), wobei die Position oder die Lage des Körpers (12) in einem geografischen Koordinatensystem bekannt ist, wobei mindestens ein referenziertes Element (22, 22A, 22B, 22C, 22D) für den Körper (12) definiert ist, jedes referenzierte Element (22, 22A, 22B, 22C, 22D) umfassend eine Vielzahl von referenzierten Punkten, wobei die Position von jedem referenzierten Punkt auf 1 Millimeter genau in einem mit dem Körper (12) verbundenen Koordinatensystem bekannt ist, wobei das Verfahren durch eine Ortungsvorrichtung (20) durchgeführt wird, wobei die Ortungsvorrichtung (20) auf der Oberseite des Kopfs des Masts (14) oder auf dem festen Abschnitt der Nutzlast (18) angeordnet ist, wobei die Ortungsvorrichtung (20) eine Kamera (24) und einen Rechner (26) umfasst, wobei das Ortungsverfahren mindestens einen der folgenden Schritte umfasst:

- Aufnehmen eines Bilds durch die Kamera (24), das Bild umfassend die referenzierten Punkte,
- Bestimmen, durch den Rechner (26), der Winkelausrichtung oder der Lage der Oberseite des Kopfs des Masts (14) in Bezug auf den Körper (12) anhand des Bilds, um eine bestimmte Ausrichtung oder Lage zu erlangen, und
- Berechnen der Winkelausrichtung oder der Lage der Oberseite des Kopfs des Masts (14) in dem geografischen Koordinatensystem anhand der bestimmten Ausrichtung oder Lage.

2. Ortungsverfahren nach Anspruch 1, wobei in dem Bestimmungsschritt auch die Position der Oberseite des Kopfs des Masts (14) in Bezug auf den Körper (12) bestimmt wird.

3. Ortungsverfahren nach Anspruch 2, wobei in dem Bestimmungsschritt eine zuvor durchgeführte Kalibrierung verwendet wird, wobei die Kalibrierung eine Verbindung zwischen der Position der referenzierten Punkte des Körpers (12) auf dem Bild und der Position der Kamera (24) in Bezug auf den Körper (12) herstellt.

4. Ortungsverfahren nach einem der Ansprüche 2 bis 4, wobei das Verfahren einen Schätzschritt umfasst, der es insbesondere ermöglicht, die sechs Informationen zu bestimmen, die die Position und die Lage der Oberseite des Kopfs des Masts (14) kennzeichnen.

5. Ortungsverfahren nach Anspruch 4, wobei das Verfahren einen Schritt der Bayes'schen Schätzung der sechs Informationen unter Verwendung mindestens eines referenzierten Punkts umfasst

6. Ortungsverfahren nach einem der Ansprüche 1 bis 5, wobei der Körper (12) durch Konturen begrenzt ist und identifizierbare kennzeichnende Elemente aufweist, wobei das oder die referenzierten Elemente (22, 22A, 22B, 22C, 22D) ausgewählt sind aus der Gruppe, bestehend aus den Konturen des Körpers (12), den kennzeichnenden Elementen des Körpers (12) des Fahrzeugs (10), den Laserdioden und den Leuchtdioden.

7. Ortungsverfahren nach einem der Ansprüche 1 bis 6, wobei mindestens zwei referenzierte Punkte einen Abstand von größer als oder gleich wie 1 Meter aufweisen.

8. Verfahren zum Erlangen der Winkelausrichtung einer Sichtlinie (LV) einer Nutzlast (18) in Bezug auf den geografischen Norden, wobei die Nutzlast (18) an einer Oberseite des Kopfs eines Masts (14) befestigt ist, wobei die Nutzlast (18) einen festen Abschnitt aufweist, wobei der Mast (14) Teil eines Fahrzeugs (10) ist, umfassend einen Körper (12), für den mindestens ein referenziertes Element (22, 22A, 22B, 22C, 22D) definiert ist, jedes referenzierte Element (22, 22A, 22B, 22C, 22D) eine Vielzahl von referenzierten Punkten umfasst, wobei das Fahrzeug (10) ferner eine Ortungsvorrichtung (20) umfasst, wobei die Ortungsvorrichtung (20) auf der Oberseite des Kopf des Masts (14) oder auf dem festen Abschnitt der Nutzlast (18) angeordnet ist, wobei die Ortungsvorrichtung (20) eine Kamera (24) und einen Rechner (26) umfasst, wobei das Verfahren mindestens einen der folgenden Schritte umfasst:

- Messen der Winkelausrichtung des Körpers (12) in Bezug auf den geografischen Norden, um eine gemessene Ausrichtung zu erlangen,
- Durchführen der Schritte eines Ortungsverfahrens nach einem der Ansprüche 1 bis 7, um die Winkelausrichtung der Oberseite des Kopfs eines Masts (14) in Bezug auf den Körper (12) zu erlangen,
- Erlangen der Winkelausrichtung der Sichtlinie (LV) in einem Koordinatensystem ($R_P$), die mit der Oberseite des Kopfs des Masts (14) verbunden ist, und
- Berechnen der Winkelausrichtung der Sichtlinie (LV) der Nutzlast (18) in Bezug auf den geografischen Norden anhand der gemessenen Ausrichtung, der Winkelausrichtung der Oberseite des Kopfs des Masts (14) in Bezug auf den Körper (12) und der Winkelausrichtung der Sichtlinie (LV) in einem Koordinatensystem ($R_P$), die mit der Oberseite des Kopfs des Masts (14) verbunden ist.

9. Verfahren zum Erlangen der Winkelausrichtung eines Körpers (12) in Bezug auf den geografischen Norden, wobei mindestens ein referenziertes Element (22, 22A, 22B, 22C, 22D) für den Körper (12) definiert ist, jedes referenzierte Element (22, 22A, 22B, 22C, 22D) umfassend eine Vielzahl von referenzierten Punkten, wobei der Körper (12) Teil eines Fahrzeugs (10) ist, umfassend einen Mast (14), umfassend einen Kopf, der eine Oberseite aufweist, die Oberseite dazu bestimmt ist, mindestens eine Nutzlast (18) zu tragen, die einen festen Abschnitt aufweist, das Fahrzeug (10) ferner umfassend eine Ortungsvorrichtung (20), wobei die Ortungsvorrichtung (20) auf der Oberseite des Kopfs des Masts (14) oder auf dem festen Abschnitt der Nutzlast (18) angeordnet ist, die Ortungsvorrichtung (20) umfassend eine Kamera (24) und einen Rechner (26), wobei das Verfahren mindestens einen der folgenden Schritte umfasst:

- Messen der Winkelausrichtung der Oberseite des Kopfs des Masts (14) in Bezug auf den geografischen Norden, um eine gemessene Ausrichtung zu erlangen,
- Durchführen der Schritte eines Ortungsverfahrens nach einem der Ansprüche 1 bis 7, um die Winkelausrichtung des Körpers (12) in Bezug auf die Oberseite des Kopfs des Masts (14) zu erlangen, und
- Berechnen der Ausrichtung des Körpers (12) in Bezug auf den geografischen Norden anhand der gemessenen Ausrichtung und der Winkelausrichtung.

10. Verfahren zum Erlangen der Winkelausrichtung nach Anspruch 8 oder 9, wobei das Fahrzeug (10) mit einer Navigationszentrale (38) versehen ist, wobei der Schritt eines Messens der Winkelausrichtung anhand Daten aus der Navigationszentrale (38) durchgeführt wird.

11. Ortungsvorrichtung (20) einer Oberseite des Kopfs eines Masts (14), wobei die Oberseite dazu bestimmt ist, mindestens eine Nutzlast (18) zu tragen, die einen festen Teil aufweist, wobei der Mast (14) Teil eines Fahrzeugs (10) ist, umfassend einen Körper (12), wobei die Position oder die Lage des Körpers (12) in einem geografischen Koordinatensystem bekannt ist, wobei mindestens ein referenziertes Element (22, 22A, 22B, 22C, 22D) für den Körper (12) definiert ist, jedes referenzierte Element (22, 22A, 22B, 22C, 22D) umfassend eine Vielzahl von referenzierten Punkten, wobei die Position von jedem referenzierten Punkt auf 1 Millimeter genau in einem mit dem Körper (12) verbundenen Koordinatensystem bekannt ist, wobei die Ortungsvorrichtung (20) auf der Oberseite des Kopfs des Masts (14) oder auf dem festen Abschnitt der Nutzlast (18) angeordnet ist, die Ortungsvorrichtung (20) umfassend:

- eine Kamera (24), die geeignet ist, um ein Bild aufzunehmen, das Bild umfassend die Vielzahl von referenzierten Punkten, und
- einen Rechner (26), der geeignet ist, um die Winkelausrichtung der Oberseite des Kopfs des Masts (14) in Bezug auf den Körper (12) anhand des Bilds zu bestimmen, um eine bestimmte Ausrichtung oder Lage zu erhalten, wobei der Rechner (26) ferner geeignet ist, die Winkelausrichtung oder die Lage der Oberseite des Kopfs des Masts (14) in dem geografischen Koordinatensystem anhand der bestimmten Ausrichtung oder Lage zu berechnen.

12. Fahrzeug (10), umfassend:

- einen Körper (12), für den mindestens ein referenziertes Element (22, 22A, 22B, 22C, 22D) definiert ist, wobei jedes referenzierte Element (22, 22A, 22B, 22C, 22D) eine Vielzahl von referenzierten Punkten umfasst, wobei die Position jedes referenzierten Punkts auf 1 Millimeter genau in einem mit dem Körper (12) verbundenen Koordinatensystem bekannt ist,
- einen Mast (14), umfassend einen Kopf, der eine Oberseite aufweist, wobei die Oberseite dazu bestimmt ist, mindestens eine Nutzlast (18) zu tragen, und
- eine Ortungsvorrichtung (20) nach Anspruch 11.

**Claims**

1. A method for locating an upper face of the head of the mast (14), the upper face being intended to carry at least one payload (18) having a stationary part, the mast (14) being part of the vehicle (10) including a body (12), the position or the attitude of the body (12) in a geographical coordinate system being known, at least one referenced element (22, 22A, 22B, 22C, 22D) being defined for the body (12), every referenced element (22, 22A, 22B, 22C, 22D) including a plurality of referenced points, the position of each referenced point is known to within 1 millimeter in a coordinate system linked to the body (12), the method being carried out by a locating device (20), the locating device (20) being arranged on the upper face of the head of the mast (14) or on the stationary part of the payload (18), the locating device (20) including a camera (24) and a computer (26), the locating method including at least one step of:

   - capturing an image by the camera (24), the image including the referenced points, and
   - determining, by means of the computer (26), the angular orientation or the attitude of the upper face of the head of the mast (14) relative to the body (12) from the image, to obtain a determined orientation or attitude, and
   - computing the angular orientation of the attitude of the upper face of the head of the mast (14) in the geographical coordinate system based on the determined orientation or attitude.

2. The locating method according to claim 1, wherein, during the determining step, the position of the upper face of the head of the mast (14) relative to the body (12) is also determined.

3. The locating method according to claim 2, wherein, during the determining step, a calibration is used that is done beforehand, the calibration establishing a link between the position of the referenced points of the body (12) in the image and the position of the camera (24) relative to the body (12).

4. The locating method according to any one of claims 2 to 4, wherein the method includes an estimating step enabling it possible to determine the six information items characterizing the position and the attitude of the mounting plane.

5. The locating method according to claim 4, wherein the method includes a Bayesian estimating step of six information items using at least one referenced point.

6. The locating method according to any one of claims 1 to 5, wherein the body (12) is delimited by contours and has identifiable characteristic elements, the referenced element(s) (22, 22A, 22B, 22C, 22D) being in the group made up of contours of the body (12), characteristic elements of the body (12) of the vehicle (10), laser diodes and light-emitting diodes.

7. The locating method according to any one of claims 1 to 6, wherein at least two referenced points have a distance greater than or equal to 1 meter.

8. A method for obtaining the angular orientation of the line of sight (LV) of a payload (18) relative to geographical North, the payload (18) being arranged in an upper face of the head of the mast (14), the payload (18) having a stationary part, the mast (14) being part of the vehicle (10) including a body (12) for which at least one referenced element (22, 22A, 22B, 22C, 22D) is defined, each referenced element (22, 22A, 22B, 22C, 22D) including a plurality of referenced points, the vehicle (10) further including a locating device (20), the locating device (20) being arranged on the upper face of the head of the mast (14) or on the stationary part of the payload (18), the locating device (20) including a camera (24) and a computer (26), the method including at least one step for:

   - measuring the angular orientation of the body (12) relative to geographical North in order to obtain a measured orientation,
   - carrying out steps of a locating method according to any one of claims 1 to 7, in order to obtain the angular orientation of the mounting plane (16) relative to the body (12),

- obtaining the angular orientation of the line of sight (LV) in a coordinate system ($R_P$) linked to the upper face of the head of the mast (14), and

- computing the angular orientation of the line of sight (LV) of the payload (18) relative to geographical North from the measured orientation, the angular orientation of the upper face of the head of the mast (14) relative to the body (12) and the angular orientation of the line of sight (LV) in a coordinate system ($\mathcal{R}_P$) linked to the upper face of the head of the mast (14).

9. A method for obtaining the angular orientation of a body (12) relative to geographical North, at least one referenced element (22, 22A, 22B, 22C, 22D) being defined for the body (12), each referenced element (22, 22A, 22B, 22C, 22D) including a plurality of referenced points, the body (12) being part of a vehicle (10) comprising a mast (14) comprising a head having an upper face, the vehicle (10) further including a locating device (20), the locating device (20) being arranged on the upper face of the head of the mast (14) or on the stationary part of the payload (18), the locating device (20) including a camera (24) and a computer (26), the method including at least one step for:

- measuring the angular orientation of the mounting plane (16) relative to geographical North in order to obtain a measured orientation,
- carrying out the steps of a locating method according to any one of claims 1 to 7, in order to obtain the angular orientation of the body (12) relative to the upper face of the head of the mast (14), and
- computing the orientation of the body (12) relative to geographical North from the measured orientation and the angular orientation.

10. The method for obtaining the angular orientation according to claim 8 or 9, wherein the vehicle (10) is provided with a navigation unit (38), the step for measuring the angular orientation being carried out from data coming from the navigation unit (38).

11. A device (20) for locating a an upper face of the head of the mast (14), the upper face being intended to carry at least one payload (18) having a stationary part, the mast (14) being part of the vehicle (10) including a body (12), the position or the attitude of the body (12) in a geographical coordinate system being known, at least one referenced element (22, 22A, 22B, 22C, 22D) being defined for the body (12), every referenced element (22, 22A, 22B, 22C, 22D) including a plurality of referenced points, the position of each referenced point is known to within 1 millimeter in a coordinate system linked to the body (12), the method being carried out by a locating device (20), the locating device (20) being arranged on the upper face of the head of the mast (14) or on the stationary part of the payload (18), the locating device (20) including a camera (24) and a computer (26), the locating device (20) including:

- a camera (24) able to capture an image, the image including the plurality of referenced points, and
- a computer (26) able to determine the angular orientation or the attitude of the upper face of the head of the mast (14) relative to the body (12) from the image, to obtain a determined orientation or attitude, and the computer (26) being further able to compute the angular orientation or the attitude of the upper face of the head of the mast (14) in the geographical coordinate system based on the determined orientation or attitude.

12. A vehicle (10) including:

- a body (12) for which at least one referenced element (22, 22A, 22B, 22C, 22D) is defined, each referenced element (22, 22A, 22B, 22C, 22D) including a plurality of referenced points, the position of each referenced point is known to within 1 millimeter in a coordinate system linked to the body (12),
- a mast (14) including the head having an upper face, the upper face being designed to carry at least one payload (18), and
- a locating device (20) according to claim 11.

FIG.1

FIG.2

FIG.3

FIG.4

FIG.5

EP 3 728 994 B1

```
┌─────────────────────────────┐
│             100             │
└─────────────────────────────┘
              │
              ▼
┌─────────────────────────────┐
│             102             │
└─────────────────────────────┘
              │
              ▼
┌─────────────────────────────┐
│             104             │
└─────────────────────────────┘
              │
              ▼
┌─────────────────────────────┐
│             106             │
└─────────────────────────────┘
              │
              ▼
          ╭─────────╮
          │   108   │
          ╰─────────╯
```

## FIG.6

# EP 3 728 994 B1

## RÉFÉRENCES CITÉES DANS LA DESCRIPTION

**Documents brevets cités dans la description**

- US 2009257620 A1
- FR 2840592 A1
- DE 102015209764 A1
- EP 1120746 A2